# EUROPÄISCHE PATENTSCHRIFT

(11) **EP 3 125 355 B1**
(45) Veröffentlichungstag und Bekanntmachung des Hinweises auf die Patenterteilung: **18.01.2023**
(21) Anmeldenummer: 16001628.3
(22) Anmeldetag: 25.07.2016
(51) Int. Cl.: H01M 10/625, H01M 10/6563, H01M 10/647, H01M 10/6556, H01M 10/6568, H01M 10/6569, H01M 10/6551, H01M 10/6554, H01M 10/6566, H01M 10/613, B60L 50/64, B60L 58/26

(54) **VORRICHTUNG FÜR EIN FAHRZEUG, INSBESONDERE FÜR EIN NUTZFAHRZEUG**
DEVICE FOR A VEHICLE, IN PARTICULAR A COMMERCIAL VEHICLE
DISPOSITIF POUR UN VEHICULE, EN PARTICULIER POUR UN VEHICULE UTILITAIRE

(30) Priorität: 30.07.2015 DE 102015009945
(43) Veröffentlichungstag der Anmeldung: 01.02.2017
(73) Patentinhaber: MAN Truck & Bus SE, 80995 München (DE)
(72) Erfinder: Lechner, Michael, 85630 Grasbrunn (DE)
(74) Vertreter: Liebl, Thomas

(56) Entgegenhaltungen:
- DE-A1-102013 200 782
- DE-A1-102013 221 517
- US-A1- 2012 196 157

## Beschreibung

Die Erfindung betrifft eine Vorrichtung für ein Fahrzeug, insbesondere für ein Nutzfahrzeug, nach dem Oberbegriff des Patentanspruches 1 sowie ein Fahrzeug, insbesondere ein Nutzfahrzeug, mit der Vorrichtung nach Patentanspruch 12.

Bei einem Fahrzeug mit elektrischem Antrieb, beispielsweise bei einem reinen Elektrofahrzeug oder bei einem Hybridfahrzeug mit einer Brennkraftmaschine und elektrischem Antrieb, ist es üblich, wenigstens eine Traktionsbatterie vorzusehen, mittels der elektrische Antriebsenergie zwischengespeichert werden kann. Zur Zwischenspeicherung der elektrischen Antriebsenergie werden heutzutage üblicherweise Lithium-Ionen-Akkumulatoren als Batteriezellen der Traktionsbatterie verwendet.

Um eine hohe Leistungsfähigkeit und gleichzeitig eine lange Lebensdauer einer Traktionsbatterie sicherzustellen, ist es erforderlich, eine Kühleinrichtung vorzusehen, mittels der die wenigstens eine Batteriezelle der Traktionsbatterie gekühlt werden kann.

Aus der DE 10 2012 215 171 A1 ist beispielsweise ein Batteriesystem bekannt, das eine Batterie mit einer Vielzahl von Batteriezellen aufweist. Dabei ist eine Temperiereinheit zur Temperierung der Batteriezellen vorgesehen, die einen mit einem flüssigen Kühlmittel befüllbaren Kühlmittelkreislauf beinhaltet. Die Temperiereinheit weist einen Sensor auf, der ausgelegt ist, eine stoffliche Beschaffenheit des Kühlmittels im Kühlmittelkreislauf zu erfassen. Auf diese Weise kann die Funktionsfähigkeit des Kühlmittelkreislaufs überprüft werden. In einer konkreten Ausgestaltung weist die Temperiereinheit zur Kühlung der Batteriezellen mehrere kühlmittelgekühlte Kühlplatten auf, von denen jede in flächiger Anlage mit zwei quaderförmigen Batteriezellen ist.

Die Kühlung der Batteriezellen mittels derartiger Kühlplatten hat jedoch den Nachteil, dass die Batteriezelle an einem an der Kühlplatte anliegenden Bereich besser gekühlt wird als an Bereichen, die einen größeren Abstand zu der Kühlplatte aufweisen. Dieser Effekt wird durch die üblicherweise schlechte Wärmeleitfähigkeit der Batteriezellen noch verstärkt. Die hohen Temperaturen an den von der Kühlplatte weiter entfernten Bereichen der Batteriezelle schränken die theoretische Leistungsfähigkeit der Batteriezelle jedoch deutlich ein, wenn die gewünschte Lebensdauer der Batteriezelle erreicht werden soll.

Die weitere US 2012/196157 A1 offenbart eine Batterie, die ein Gehäuse, in dem Gehäuse angeordnete Batteriezellen, ein Flüssigkeits-Temperatursteuersystem zur Steuerung der Temperatur der Batteriezellen sowie ein Gas-Temperatursteuersystem zur Steuerung der Temperatur der Batteriezellen umfasst. Dabei weist das Gas-Temperatursteuersystem hier wenigstens einen geschlossenen Kreislauf in dem Gehäuse auf.

Aus der DE 10 2013 200 782 A1 ist ein System zur Vermeidung von Kondensatbildung an einer Batterie bekannt, bei dem ein die Batterie umgebendes Gehäuse wenigstens eine Lufteintrittsöffnung und wenigstens eine Luftaustrittsöffnung aufweist. Dabei ist die wenigstens eine Lufteintrittsöffnung hier derart ausgebildet, dass dem Gehäuse zugeführte Luft zur Umströmung der Batterie in das Gehäuse einströmen kann. Zudem ist die wenigstens eine Luftaustrittsöffnung hier derart ausgebildet, dass Luft aus dem Gehäuse ausströmen kann.

Die weitere DE 10 2013 221 517 A1 betrifft eine Einrichtung für das indirekte Kühlen eines Batteriemoduls eines umweltfreundlichen Fahrzeugs, bei der eine thermisch leitende Grenzflächenplatte bzw. Zwischenplatte vorgesehen ist, in welcher umgeformte bzw. umgepresste Wärmeleitungsrohre eingebettet sind. Diese thermisch leitende Zwischenplatte ist hier zwischen wenigstens zwei Batteriezellen angeordnet. Zudem weist die Einrichtung hier auch eine Wärmesenke auf, welche integral an einem oberen Endteilbereich jedes umgeformten Wärmeleitungsrohres angeschlossen und in einem kühlenden Luftströmungspfad angeordnet ist.

Aufgabe der Erfindung ist es, eine Vorrichtung für ein Fahrzeug, insbesondere für ein Nutzfahrzeug, bereitzustellen, mittels der die Kühlung der wenigstens einen Batteriezelle auf einfache und effektive Weise verbessert wird.

Diese Aufgabe wird gelöst mit den Merkmalen der unabhängigen Patentansprüche. Bevorzugte Weiterbildungen sind in den Unteransprüchen offenbart.

Gemäß Patentanspruch 1 wird eine Vorrichtung für ein Fahrzeug, insbesondere für ein Nutzfahrzeug, vorgeschlagen, mit einem Batteriemodul, insbesondere mit einem Traktionsbatteriemodul, wobei das Batteriemodul ein Batteriegehäuse und wenigstens eine in einem Aufnahmeraum des Batteriegehäuses angeordnete Batteriezelle aufweist, wobei das Batteriemodul wenigstens ein kühlmittelgekühltes Kühlelement zur Kühlung der Batteriezelle aufweist, und wobei das Kühlelement mit wenigstens einem Kühlwandbereich in, insbesondere flächiger, Anlage mit der wenigstens einen Batteriezelle ist. Erfindungsgemäß ist zusätzlich zu dem kühlmittelgekühlten Kühlelement eine Luft-Kühleinrichtung vorgesehen, mittels der die wenigstens eine Batteriezelle an einem von dem kühlmittelgekühlten Kühlelement abragenden Bereich mit einem Kühlluftstrom luftgekühlt werden kann.

Auf diese Weise wird die Kühlung der wenigstens einen Batteriezelle einfach und effektiv verbessert, da die Batteriezelle nun nicht nur mittels des kühlmittelgekühlten Kühlelements, sondern zusätzlich auch an dem von dem kühlmittelgekühlten Kühlelement abragenden Bereich mittels des Kühlluftstroms luftgekühlt wird. Durch die Luftkühlung des von dem Kühlelement abragenden Bereichs der Batteriezelle wird der Temperaturdifferenz zwischen dem an dem Kühlelement anliegenden Bereich der Batteriezelle und den weiter von dem Kühlelement entfernten Bereichen der Batteriezelle entgegengewirkt. Dadurch kann das Leistungspotential der Batteriezelle besser ausgenutzt werden. Eine Luftkühlung des von dem Kühlelement abragenden Bereichs der Batteriezelle eignet sich dabei besonders zur Verringerung der Temperaturdifferenzen an der Batteriezelle, da mittels des Kühlluftstroms auf einfache Weise ein großer Bereich der Batteriezelle effektiv gekühlt werden kann.

In einer bevorzugten konkreten Ausgestaltung der erfindungsgemäßen Vorrichtung ist die wenigstens eine Batteriezelle im Wesentlichen quaderförmig ausgebildet, wobei die quaderförmige Batteriezelle mit einer Anlage-Seitenwand in Anlage mit dem Kühlelement ist, und wobei eine der Anlage-Seitenwand gegenüberliegende Außen-Seitenwand der Batteriezelle mittels der Luft-Kühleinrichtung luftgekühlt werden kann. Auf diese Weise kann die üblicherweise eine besonders hohe Temperatur aufweisende Außen-Seitenwand der Batteriezelle mittels der Luft-Kühleinrichtung luftgekühlt werden. Die Batteriezelle muss natürlich nicht zwingend quaderförmig ausgebildet sein. Beispielsweise kann die Batteriezelle auch zylinderförmig ausgebildet sein oder aber auch jegliche andere Form aufweisen. Wesentlich ist jedoch, dass die Luft-Kühleinrichtung derart ausgebildet ist, dass ein Bereich der Batteriezelle, der am weitesten von dem Kühlelement entfernt ist, mittels des Kühlluftstroms luftgekühlt werden kann.

In einer weiteren bevorzugten Ausgestaltung weist die Luft-Kühleinrichtung wenigstens eine Luftstrom-Erzeugungseinrichtung, insbesondere wenigstens einen Ventilator, auf, mittels der der die Batteriezelle luftkühlende Kühlluftstrom erzeugt werden kann. Grundsätzlich kann die Luftstrom-Erzeugungseinrichtung natürlich teilweise oder vollständig außerhalb des Batteriegehäuses angeordnet sein. Bevorzugt ist jedoch vorgesehen, wenn die Luftstrom-Erzeugungseinrichtung in dem Aufnahmeraum bzw. im Inneren des Batteriegehäuses angeordnet ist, um einen besonders kompakten Aufbau zu realisieren.

Erfindungsgemäß ist das kühlmittelgekühlte Kühlelement derart angeordnet, dass der durch den Aufnahmeraum des Batteriegehäuses strömende Kühlluftstrom mittels des Kühlelements gekühlt werden kann. Auf diese Weise kann der durch den Aufnahmeraum strömende Kühlluftstrom besonders einfach und effektiv gekühlt werden.

Erfindungsgemäß ist das Kühlelement zudem plattenförmig ausgebildet, um das Kühlelement einfach und funktionsoptimiert zu gestalten. Bevorzugt weist das Kühlelement wenigstens einen Kühlmittelkanal auf, der von einem Kühlmittel, insbesondere von Kühlwasser, durchströmt werden kann. So kann die Kühlung des Kühlelements mittels des Kühlmittels auf einfache und zuverlässige Weise realisiert werden.

Erfindungsgemäß kann der Kühlluftstrom mittels des Batteriegehäuses und mittels wenigstens eines Luft-Leitelements durch den Aufnahmeraum des Batteriegehäuses geleitet werden, dergestalt, dass der Kühlluftstrom, insbesondere ausgehend von der Luftstrom-Erzeugungseinrichtung, zunächst an einer freien Hauptflächenwand des plattenförmigen Kühlelements vorbeigeleitet und dort abgekühlt wird, anschließend an der wenigstens einen Batteriezelle vorbeigeleitet und dort erwärmt wird und schließlich wieder an der freien Hauptflächenwand des plattenförmigen Kühlelements vorbeigeleitet und dort wieder abgekühlt wird. Durch diesen geschlossenen Luftkühl-Kreislauf wird ein besonders kompakter Aufbau realisiert und eine funktionssichere Luftkühlung der wenigstens einen Batteriezelle zuverlässig sichergestellt. Insbesondere kann durch den geschlossenen Luftkühl-Kreislauf die Luftfeuchtigkeit in dem Aufnahmeraum des Batteriegehäuses wie gewünscht eingestellt werden. Alternativ zu dem geschlossenen Luftkühl-Kreislauf wäre es natürlich aber auch denkbar, die Batteriezelle mit einem offenen Luftkühl-Kreislauf zu kühlen. Als freie Hauptflächenwand ist hier eine Hauptflächenwand des plattenförmigen Kühlelements zu verstehen, die mit keinem weiteren Bauteil in Anlage bzw. in Kontakt ist.

Bevorzugt verlaufen die Hauptflächen der wenigstens einen plattenförmigen Batteriezelle in Strömungsrichtung des an der Batteriezelle vorbeiströmenden Kühlluftstroms, um eine besonders effektive Kühlung der plattenförmigen Batteriezellen zu gewährleisten. Alternativ kann auch vorgesehen sein, dass die Hauptflächen der wenigstens einen plattenförmigen Batteriezelle quer zur Strömungsrichtung des an der Batteriezelle vorbeiströmenden Kühlluftstroms vorbeilaufen.

Weiter bevorzugt ist der Kühlwandbereich des Kühlelements durch eine Hauptflächenwand des plattenförmigen Kühlelements gebildet, um eine effektive Kühlung der Batteriezelle mittels des plattenförmigen Kühlelements sicherzustellen.

In einer bevorzugten Ausgestaltung weist das Kühlelement zur Kühlung des Kühlluftstroms Kühlrippen auf, um den Kühlluftstrom effektiv abkühlen zu können. Bevorzugt ist dabei vorgesehen, dass die Kühlrippen des Kühlelements an der freien Hauptflächenwand des plattenförmigen Kühlelements ausgebildet und/oder angeordnet sind. Auf diese Weise ist das Kühlelement einfach und funktionsoptimiert gestaltet.

Vorzugsweise verlaufen die Kühlrippen in zur Strömungsrichtung des an der freien Hauptflächenwand des Kühlelements vorbeiströmenden Kühlluftstroms, um den Kühlluftstrom besonders effektiv zu kühlen. Alternativ können die Kühlrippen aber auch quer zur Strömungsrichtung des an der freien Hauptflächenwand des plattenförmigen Kühlelements vorbeiströmenden Kühlluftstroms verlaufen.

Weiter bevorzugt ist wenigstens ein Kühlluftstrom-Kühlelement vorgesehen, mittels dem der durch den Aufnahmeraum des Batteriegehäuses strömende Kühlluftstrom gekühlt werden kann. Mittels eines derartigen, speziell zur Kühlung des Kühlluftstroms vorgesehenen Kühlelements kann der Kühlluftstrom und somit auch die wenigstens eine Batteriezelle besonders effektiv gekühlt werden . Bevorzugt ist das eine Kühlluftstrom-Kühlelement dabei derart angeordnet, dass der Kühlluftstrom, insbesondere ausgehend von der Luftstrom-Erzeugungseinrichtung, zunächst an dem Kühlluftstrom-Kühlelement vorbeigeleitet und dort abgekühlt wird, anschließend an der wenigstens einen Batteriezelle vorbeigeleitet und dort erwärmt wird und schließlich wieder an den wenigstes einen Kühlluftstrom-Kühlelement vorbeigeleitet und dort wieder abgekühlt wird. Auf diese Weise kann das Kühlluftstrom-Kühlelement effektiv und einfach in einen geschlossenen Luftkühl-Kreislauf integriert werden. Bevorzugt ist zudem vorgesehen, dass das wenigstens eine Kühlelement durch einen Verdampfer eines Kühlmittelkreislauf gebildet ist.

Grundsätzlich kann die wenigstens eine Batteriezelle natürlich an dem Batteriegehäuse des Batteriemoduls festgelegt bzw. befestigt sein. Bevorzugt ist es jedoch, wenn die wenigstens eine Batteriezelle an dem Kühlelement festgelegt bzw. befestigt ist, um einen einfachen Aufbau zu realisieren und eine effektive Kühlung der Batteriezelle mittels des Kühlelements zuverlässig sicherzustellen. Weiter bevorzugt ist das wenigstens eine Kühlelement an dem Batteriegehäuse festgelegt bzw. befestigt.

Vorzugsweise ist der Aufnahmeraum des Batteriegehäuses nach außen hin abgedichtet und/oder abgeschlossen ist, um Verunreinigungen bzw. Schmutz von der Batteriezelle fernzuhalten und die Luftfeuchtigkeit in dem Aufnahmeraum wie gewünscht einstellen zu können.

Des Weiteren wird auch ein Fahrzeug, insbesondere ein Nutzfahrzeug, mit der erfindungsgemäßen Vorrichtung beansprucht. Die sich hieraus ergebenden Vorteile sind identisch mit den bereits gewürdigten Vorteilen der erfindungsgemäßen Vorrichtung, so dass diese an dieser Stelle nicht wiederholt werden. Das Fahrzeug weist dabei vorzugsweise einen rein elektrischen Antrieb oder einen Hybridantrieb aus Brennkraftmaschine und elektrischem Antrieb auf.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: in einer perspektivischen Darstellung ein Nutzfahrzeug mit der erfindungsgemäßen Vorrichtung;
- Fig. 2: einen Schnitt durch ein Batteriemodul der Vorrichtung;
- Fig. 3: in einer Darstellung gemäß Fig. 2 eine zweite Ausführungsform der Vorrichtung; und
- Fig. 4: in einer Darstellung gemäß Fig. 2 eine dritte Ausführungsform der Vorrichtung.

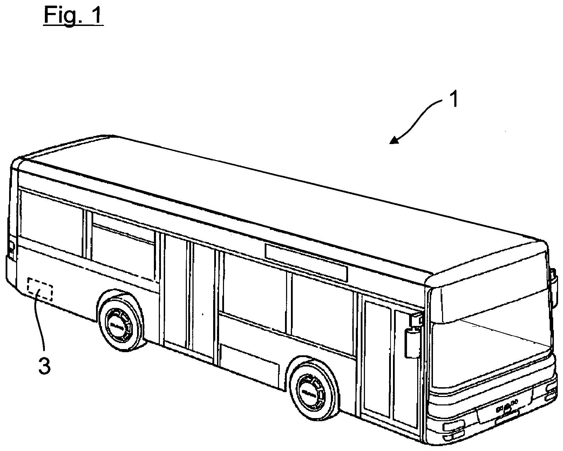

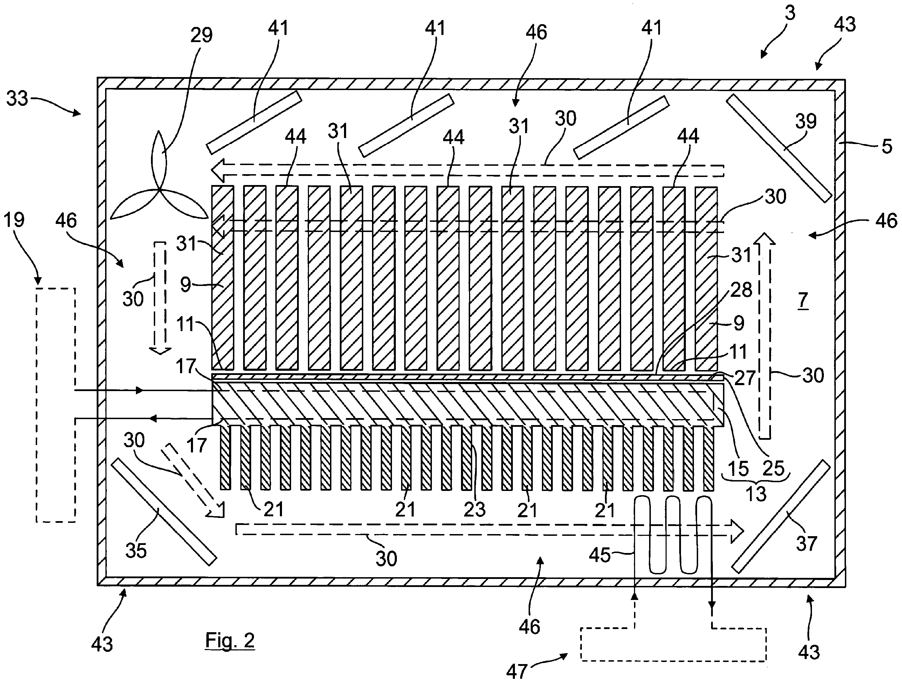

In Fig. 1 ist ein hier beispielhaft als Omnibus 1 ausgebildetes Nutzfahrzeug gezeigt. Der Omnibus 1 weist hier beispielhaft einen Hybridantrieb mit einer Brennkraftmaschine und einem elektrischen Antrieb auf. Alternativ könnte der Omnibus 1 beispielsweise aber auch einen rein elektrischen Antrieb aufweisen. Der elektrische Antrieb des Omnibusses 1 weist ein in Fig. 1 mit gestrichelten Linien angedeutetes Batteriemodul 3 auf, mittels dem elektrische Energie zum Antreiben des Omnibusses 1 zwischengespeichert werden kann. Der Aufbau des Batteriemoduls 3 ist schematisch in Fig. 2 gezeigt.

Wie aus Fig. 2 hervorgeht, weist das Batteriemodul 3 ein Batteriegehäuse 5 auf. Das Batteriegehäuse 5 weist hier beispielhaft einen rechteckförmigen Querschnitt auf und begrenzt einen Aufnahmeraum 7, in dem hier beispielhaft mehrere Batteriezellen 9 angeordnet sind. Die Batteriezellen 9 können beispielsweise als Lithium-Ionen-Akkumulatoren ausgebildet sein. Zudem sind die Batteriezellen 9 hier beispielhaft plattenförmig ausgebildet und jeweils mit einer Anlage-Seitenwand 11 in Anlage mit einem kühlmittelgekühlten, ebenfalls im Inneren des Batteriegehäuses 5 angeordneten Kühlelement 13, mittels dem die Batteriezellen 9 gekühlt werden.

Das Kühlelement 13 weist hier beispielhaft eine Kühlplatte 15 auf, die hier beispielhaft aus Aluminium gefertigt ist. Die Kühlplatte 15 weist Kühlmittelkanäle 17 auf, die von einem Kühlmittel, hier von Kühlwasser, durchströmt werden. Die Kühlplatte 15 ist hier beispielhaft Bestandteil eines in Fig. 2 lediglich schematisch angedeuteten, teilweise außerhalb des Batteriegehäuses 5 angeordneten Kühlmittelkreislaufs 19. Die Kühlplatte 15 bildet einen wärmeaufnehmenden Wärmeübertrager dieses Kühlmittelkreislaufs 19 aus. Gemäß Fig. 2 weist die Kühlplatte 15 hier beispielhaft auch Kühlrippen 21 auf. Die Kühlrippen 21 sind hier beispielhaft an einer, eine freie Hauptfläche der Kühlplatte 15 bildenden freien Hauptflächenwand 23 der Kühlplatte 15 ausgebildet bzw. angeordnet.

Weiter weist das Kühlelement 13 hier beispielhaft auch eine wärmeleitfähige Matte 25 auf, mittels der die Wärmeübertragung zwischen den Batteriezellen 9 und der Kühlplatte 15 verbessert wird. Die wärmeleitfähige Matte 25 ist zwischen den Batteriezellen 9 und der Kühlplatte 15 angeordnet. Zudem ist die wärmeleitfähige Matte 25 mit einer Hauptflächenwand 27 in einer flächigen Anlage mit der Kühlplatte 15 und mit einer Hauptflächenwand 28 in einer flächigen Anlage mit den Batteriezellen 9. Weiter sind die Batteriezellen 9 hier beispielhaft an dem Kühlelement 13 festgelegt. Die Festlegung der Batteriezellen 9 an dem Kühlelement 13 kann beispielsweise mittels einer wenigstens einer Schraubverbindung erfolgen. Zudem ist das Kühlelement 13 hier beispielhaft an dem Batteriegehäuse 5 festgelegt.

Wie aus Fig. 2 weiter hervorgeht, ist in dem Aufnahmeraum 7 des Batteriegehäuses 5 auch eine hier beispielhaft als Ventilator 29 ausgebildete Luftstrom-Erzeugungseinrichtung vorgesehen, mittels der ein Kühlluftstrom 30 in dem Aufnahmeraum 7 bzw. im Inneren des Batteriegehäuses 5 erzeugt werden kann. Der Ventilator 29 ist Bestandteil einer Luft-Kühleinrichtung, mittels der die Batteriezellen 9 an einem von dem Kühlelement 13 abragenden Bereichen 31 mit dem Kühlluftstrom 30 luftgekühlt werden. Der Ventilator 29 ist hier beispielhaft in einem Eckbereich 33 des Batteriegehäuses 5 angeordnet.

Weiter sind hier beispielhaft in dem Aufnahmeraum 7 des Batteriegehäuses 5 auch mehrere, hier beispielhaft plattenförmige Luft-Leitelemente 35, 37, 39, 41 vorgesehen. Die Luft-Leitelement 35, 37, 39 sind den weiteren Eckbereichen 43 des Batteriegehäuses 5 derart zugeordnet, dass der Kühlluftstrom 30 in den Eckbereichen 43 des Batteriegehäuses 5 mittels der Luft-Leitelemente 35, 37, 39 zur Verringerung eines Strömungswiderstands umgeleitet wird. Die Luft-Leitelemente 41 sind den Batteriezellen 9 derart zugeordnet, dass der Kühlluftstrom 30 an den von dem Kühlelement 13 abragenden Bereichen 31 der Batteriezellen 9 bzw. an den, den Anlage-Seitenwänden 11 der Batteriezellen 9 gegenüberliegenden Außen-Seitenwänden 44 der Batteriezellen 9 vorbeiströmt.

Das Batteriegehäuse 5, die Luft-Leitelemente 35, 37, 39, 41 bilden hier in Kombination mit den zentral in dem Aufnahmeraum 7 des Batteriegehäuses 5 angeordneten Komponenten Kühlelement 13 und Batteriezellen 9 einen Strömungskanal 46 aus, mittels dem der Kühlluftstrom unter Ausbildung eines geschlossenen Luftkühl-Kreislaufs durch den Aufnahmeraum 7 des Batteriegehäuses 5 geleitet wird.

Im Folgenden wird die Kühlluft-Strömung in dem Aufnahmeraum 7 des Batteriegehäuses 5 nochmals detailliert erläutert:
Ausgehend von dem Ventilator 29 wird der Kühlluftstrom 30 zunächst zu dem Luft-Leitelement 35 geleitet, dort umgelenkt und anschließend an der freien Hauptflächenwand 23 der Kühlplatte 15 vorbeigeleitet und dort abgekühlt. Bevor der Kühlluftstrom 30 auf das Luft-Leitelement 37 auftrifft, wird der mittels eines beispielhaft als Verdampfer 45 ausgebildetem Kühlluftstrom-Kühlelements noch weiter abgekühlt. Der Verdampfer 45 ist Bestandteil eines hier beispielhaft teilweise außerhalb des Batteriegehäuses 5 angeordneten Kühlmittelkreislaufs 47. Anschließend wird der Kühlluftstrom 30 mittels der Luft-Leitelemente 37, 39 umgeleitet, an den Batteriezellen 9 vorbeigeleitet und dort erwärmt. Schließlich gelangt der erwärmte Kühlluftstrom 30 wieder zu dem Ventilator 29 und der Luftkühl-Kreislauf beginnt von neuem.

Wie aus Fig. 2 weiter ersichtlich ist, verlaufen die Kühlrippen 21 hier beispielhaft quer zur Strömungsrichtung des an der freien Hauptflächenwand 27 der Kühlplatte 15 vorbeiströmenden Kühlluftstroms 30. Zudem sind die Batteriezellen 9 hier beispielhaft derart angeordnet, dass die Hauptflächen der plattenförmigen Batteriezellen 9 quer zur Strömungsrichtung des an den Batteriezellen 9 vorbeiströmenden Kühlluftstroms 30 verlaufend ausgerichtet.

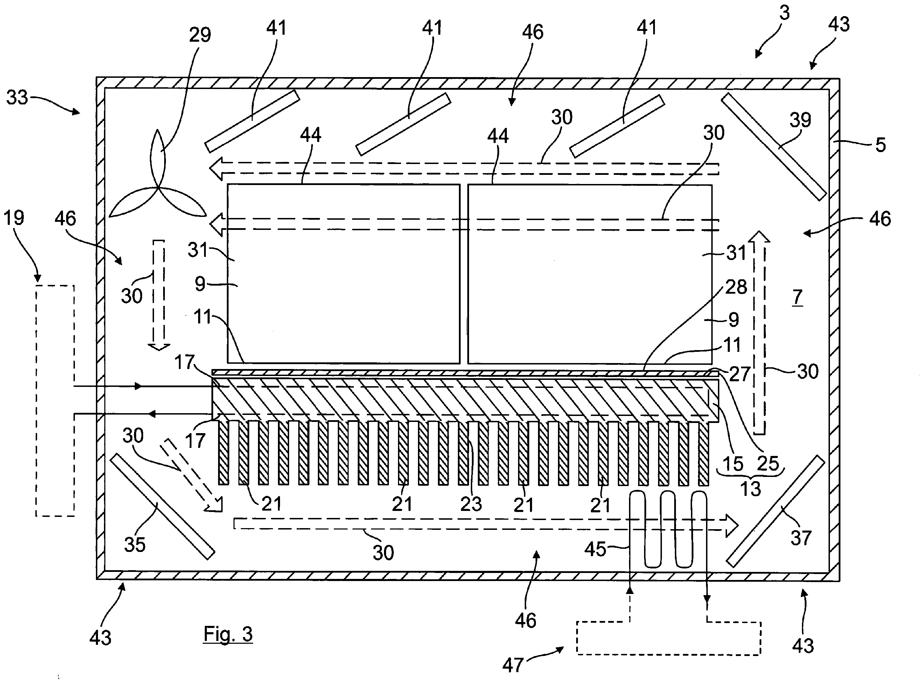

In Fig. 3 ist eine zweite Ausführungsform des Batteriemoduls 3 gezeigt. Im Vergleich zu der in Fig. 2 gezeigten ersten Ausführungsform des Batteriemoduls 3 sind die Batteriezellen 9 hier derart angeordnet, dass die Hauptflächen der plattenförmigen Batteriezellen 9 in Strömungsrichtung des an den Batteriezellen 9 vorbeiströmenden Kühlluftstroms 30 verlaufen.

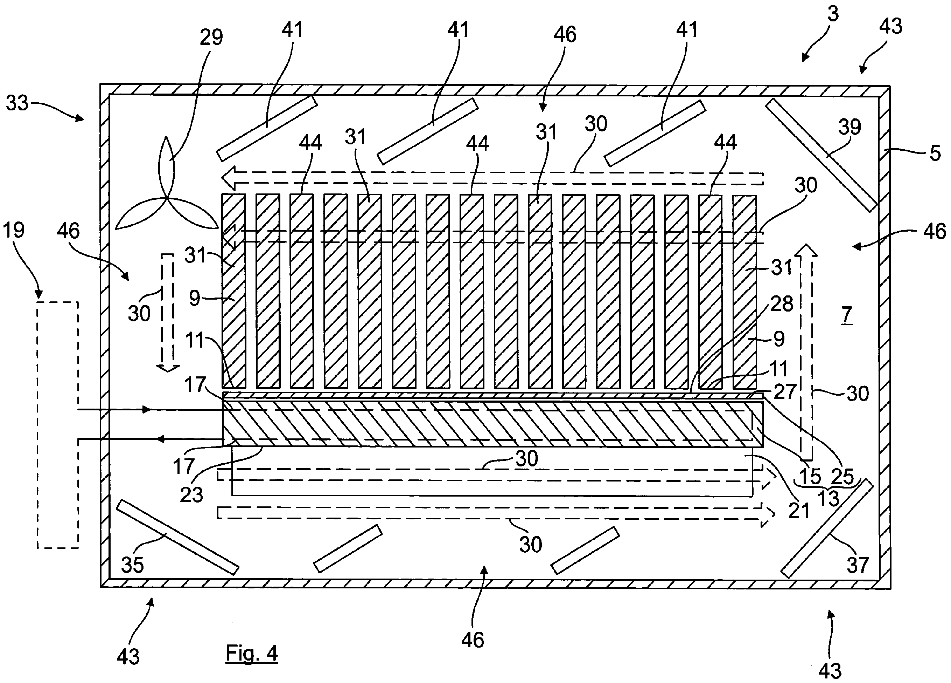

In Fig. 4 ist eine dritte Ausführungsform des Batteriemoduls 3 gezeigt. Im Vergleich zu der in Fig. 1 gezeigten ersten Ausführungsform des Batteriemoduls 3 verlaufen die Kühlrippen 21 der Kühlplatte 15 hier in Strömungsrichtung des an der freien Hauptflächenwand 27 der Kühlplatte 15 vorbeiströmenden Kühlluftstroms 30.

### Bezugszeichenliste

- 1: Omnibus
- 3: Batteriemodul
- 5: Batteriegehäuse
- 7: Aufnahmeraum
- 9: Batteriezelle
- 11: Anlage-Seitenwand
- 13: Kühlelement
- 15: Kühlplatte
- 17: Kühlmittelkanal
- 19: Kühlmittelkreislauf
- 21: Kühlrippe
- 23: freie Hauptflächenwand
- 25: Matte
- 27: Hauptflächenwand
- 28: Hauptflächenwand
- 29: Ventilator
- 30: Luftstrom
- 31: abragender Bereich
- 33: Eckbereich
- 35: Luft-Leitelement
- 37: Luft-Leitelement
- 39: Luft-Leitelement
- 41: Luft-Leitelement
- 43: Eckbereich
- 44: Außen-Seitenwänden
- 45: Verdampfer
- 46: Strömungskanal
- 47: Kühlmittelkreislauf

## Patentansprüche

1. Vorrichtung für ein Fahrzeug, insbesondere für ein Nutzfahrzeug, mit einem Batteriemodul (3), insbesondere mit einem Traktionsbatteriemodul, wobei das Batteriemodul (3) ein Batteriegehäuse (5) und wenigstens eine in einem Aufnahmeraum (7) des Batteriegehäuses (5) angeordnete Batteriezelle (9) aufweist,
wobei das Batteriemodul (3) wenigstens ein kühlmittelgekühltes Kühlelement (13) zur Kühlung der Batteriezelle (9) aufweist,
wobei das Kühlelement (13) mit wenigstens einem Kühlwandbereich (28) in, insbesondere flächiger, Anlage mit der wenigstens einen Batteriezelle (9) ist,
wobei eine Luft-Kühleinrichtung (29, 45) vorgesehen ist, mittels der die wenigstens eine Batteriezelle (9) an einem von dem kühlmittelgekühlten Kühlelement (13) abragenden Bereich (31) mit einem Kühlluftstrom (30) luftkühlbar ist,
wobei das Kühlelement (13) derart angeordnet ist, dass der durch den Aufnahmeraum (7) strömende Kühlluftstrom (30) mittels des Kühlelements (13) kühlbar ist, **dadurch gekennzeichnet,**
**dass** der Kühlluftstrom (30) mittels des Batteriegehäuses (5) und mittels wenigstens eines Luft-Leitelements (35, 37, 39, 41) durch den Aufnahmeraum (7) des Batteriegehäuses (5) leitbar ist, dergestalt, dass der Kühlluftstrom (30) zunächst an einer freien Hauptflächenwand (23) des plattenförmigen Kühlelements (13) vorbeigeleitet und dort abgekühlt wird, anschließend an der wenigstens einen Batteriezelle (9) vorbeigeleitet und dort erwärmt wird und schließlich wieder an der freien Hauptflächenwand (23) des plattenförmigen Kühlelements (13) vorbeigeleitet und dort wieder abgekühlt wird, und
**dass** das Kühlelement (13) und die Batteriezellen (9) zentral im Batteriegehäuse (5) angeordnet sind und das Batteriegehäuse (5) und das wenigstens eine Luft-Leitelement (35, 37, 39, 41) mit dem Kühlelement (13) und den Batteriezellen (9) einen Strömungskanal (46) ausbilden.

2. Vorrichtung nach Anspruch 1, **dadurch gekennzeichnet, dass** die wenigstens eine Batteriezelle (9) im Wesentlichen quaderförmig ausgebildet ist, wobei die quaderförmige Batteriezelle (9) mit einer Anlage-Seitenwand (11) in Anlage mit dem Kühlelement (13) ist, und wobei eine zu der Anlage-Seitenwand (11) gegenüberliegende Seitenwand (44) der Batteriezelle (9) mittels der Luft-Kühleinrichtung (29,45) luftkühlbar ist.

3. Vorrichtung nach Anspruch 1 oder 2, **dadurch gekennzeichnet, dass** die Luft-Kühleinrichtung (29, 45) wenigstens eine Luftstrom-Erzeugungseinrichtung (29), insbesondere wenigstens einen Ventilator, aufweist, mittels der der die Batteriezelle (9) luftkühlende Kühlluftstrom (30) erzeugbar ist, wobei bevorzugt vorgesehen ist, dass die Luftstrom-Erzeugungseinrichtung (29) in dem Aufnahmeraum (7) des Batteriegehäuses (5) angeordnet ist.

4. Vorrichtung nach einem der vorhergehenden Ansprüche, **dadurch gekennzeichnet, dass** das Kühlelement (13) wenigstens einen Kühlmittelkanal (17) aufweist, der von einem Kühlmittel, insbesondere von Kühlwasser, durchströmbar ist.

5. Vorrichtung nach einem der vorhergehenden Ansprüche, **dadurch gekennzeichnet, dass** die Hauptflächen der wenigstens einen plattenförmigen Batteriezelle (9) quer zur Strömungsrichtung des an der Batteriezelle (9) vorbeiströmenden Kühlluftstroms (30) verlaufen, oder dass die Hauptflächen der wenigstens einen plattenförmigen Batteriezelle (9) in Strömungsrichtung des an der Batteriezelle (9) vorbeiströmenden Kühlluftstroms (30) verlaufen.

6. Vorrichtung nach einem der vorhergehenden Ansprüche, **dadurch gekennzeichnet, dass** der Kühlwandbereich (28) des Kühlelements (13) durch eine Hauptflächenwand des plattenförmigen Kühlelements (13) gebildet ist.

7. Vorrichtung nach einem der vorhergehenden Ansprüche, **dadurch gekennzeichnet, dass** das Kühlelement (13) zur Kühlung des Kühlluftstroms (30) Kühlrippen (21) aufweist, wobei bevorzugt vorgesehen ist, dass die Kühlrippen (21) des Kühlelements (13) an der freien Hauptflächenwand (23) des plattenförmigen Kühlelements (13) ausgebildet und/oder angeordnet sind.

8. Vorrichtung nach Anspruch 7, **dadurch gekennzeichnet, dass** die Kühlrippen (21) quer zur Strömungsrichtung des an der freien Hauptflächenwand (23) des Kühlelements (13) vorbeiströmenden Kühlluftstroms (30) verlaufen, oder dass die Kühlrippen (21) in Strömungsrichtung des an der freien Hauptflächenwand (23) des plattenförmigen Kühlelements (13) vorbeiströmenden Kühlluftstroms (30) verlaufen.

9. Vorrichtung nach einem der vorhergehenden Ansprüche, **dadurch gekennzeichnet, dass** wenigstens ein Kühlluftstrom-Kühlelement (45) vorgesehen ist, mittels dem der durch den Aufnahmeraum (7) strömende Kühlluftstrom (30) kühlbar ist, wobei bevorzugt vorgesehen ist, dass das wenigstens eine Kühlluftstrom-Kühlelement (45) durch einen Verdampfer eines Kühlmittelkreislaufs (47) gebildet ist.

10. Vorrichtung nach einem der vorhergehenden Ansprüche, **dadurch gekennzeichnet, dass** die wenigstens eine Batteriezelle (9) an dem Kühlelement (13) festgelegt ist, und/oder dass das wenigstens eine Kühlelement (13) an dem Batteriegehäuse (5) festgelegt ist.

11. Vorrichtung nach einem der vorhergehenden Ansprüche, **dadurch gekennzeichnet, dass** der Aufnahmeraum (7) des Batteriegehäuses (5) nach außen hin abgedichtet und/oder abgeschlossen ist.

12. Fahrzeug, insbesondere Nutzfahrzeug, mit einer Vorrichtung nach einem der vorhergehenden Ansprüche.

## Claims

1. Bus, in particular coach, having a plurality of passenger spaces (9) and having at least one passageway (7), along which it is possible to walk and/or travel, for reaching the passenger spaces (9), **characterized in that** at least one lifting device (23) is provided, by means of which a lifting floor area (21) of the passageway (7), together with an object (5) located on the lifting floor area (21), is able to be shifted vertically from a basic position into a lifted position and vice versa, wherein, in the basic position, the lifting floor area (21) is at the same height as at least one passageway floor area (25) adjoining the lifting floor area and is arranged vertically below at least one raised floor area (17) adjoining the lifting floor area (21), and wherein, in the lifted position, the lifting floor area (21) is at the same height as the raised floor area (17) adjoining the lifting floor area.

2. Bus according to Claim 1, **characterized in that**, by means of the lifting device (23), the lifting floor area (21), together with a wheelchair user as passenger located on the lifting floor area (21), is able to be shifted vertically from the basic position into the lifted position and vice versa, and **in that** the raised floor area (17) forms a floor space (15) for the wheelchair user (5).

3. Bus according to Claim 1 or 2, **characterized in that** the raised floor area is formed by a passageway floor area.

4. Bus according to any of the preceding claims, **characterized in that** the transition between the lifting floor area (21) arranged in the basic position and the raised floor area (17) is in the form of a step, in particular of a stair.

5. Bus according to any of the preceding claims, **characterized in that** the lifting device (23) has an, in particular pneumatic, drive device (27), by means of which the lifting floor area (21), together with the object (5) located on the lifting floor area (21), is able to be shifted vertically relative to the raised floor area (17).

6. Bus according to Claim 5, **characterized in that** the drive device in the form of a pneumatic drive device (27)has at least one, in particular a plurality of air cushions (33) that are inflatable by means of an inflating device (31), in particular by means of a compressor, wherein, as a result of the at least one air cushion (33) being inflated, the lifting floor area (21) is able to be raised vertically relative to the raised floor area (17), and wherein, as a result of air being let out of the at least one air cushion (33), the lifting floor area (21) is able to be lowered vertically relative to the raised floor area (17).

7. Bus according to Claim 6, **characterized in that** the lifting floor area (17) is formed by an, in particular panel-like, floor segment, wherein the at least one air cushion (33), as seen in a vertical direction, is arranged between the floor segment and a supporting-wall region (39), arranged beneath the floor segment (21), for vertically supporting the at least one air cushion (33), wherein provision is preferably made for the floor segment arranged in the basic position to rest on at least one supporting element.

8. Bus according to Claim 7, **characterized in that** the supporting-wall region (39) and/or a supporting element (37) on which the floor segment arranged in the basic position rests is formed by a trough body, wherein the at least one air cushion (33) is arranged at least partially in a receiving space (35) of the trough body (37), wherein provision is preferably made for the trough body (37) to be connected to a chassis frame (20) of the bus (1), in particular by means of a weld.

9. Bus according to any of the preceding claims, **characterized in that** the lifting floor area (21) is formed by an, in particular panel-like, floor segment, wherein the lifting device (23) has a guide device (45, 51) by means of which the floor segment (21) is guided so as to be able to be shifted vertically relative to the raised floor area (17).

10. Bus according to Claim 8 or 9, **characterized in that** the floor segment (21) is secured to the trough body (37) so as to be able to be shifted vertically relative to the trough body (37), wherein provision is preferably made for the trough body (37) to have a plurality of, in particular two, guide rods (45) by means of which the floor segment (21) is guided so as to be able to be shifted vertically relative to the trough body (37).

11. Bus according to Claim 10, **characterized in that** each guide rod of the trough body (37) is assigned a corresponding guide segment (51) of the floor segment (21), wherein each guide element (51) has at least one annular region (53) which engages annularly around the associated guide rod (45), in particular with a defined gap spacing.

12. Method for operating a bus according to one of the preceding claims, wherein the bus (1) has a plurality of passenger spaces (9) and at least one passageway (7), along which it is possible to walk and/or travel, for reaching the passenger spaces (9), **characterized in that** the bus (1) has at least one lifting device (23) by means of which a lifting floor area (21) of the passageway (7), together with an object (5) located on the lifting floor area (21), is shifted vertically from a basic position into a lifted position and vice versa, wherein, in the basic position, the lifting floor area (21) is at the same height as at least one passageway floor area (25) adjoining the lifting floor area and is arranged vertically below at least one raised floor area (17) adjoining the lifting floor area (21), and wherein, in the lifted position, the lifting floor area (21) is at the same height as the raised floor area (17) adjoining the lifting floor area (21).

## Revendications

1. Bus, notamment autocar, avec plusieurs places de passagers (9) et avec au moins un passage (7) praticable et/ou accessible pour atteindre les places de passagers (9), **caractérisé en ce qu'**au moins un dispositif de levage (23) est prévu, au moyen duquel une zone de plancher de levage (21) du passage (7) peut être déplacée verticalement, conjointement avec un objet (5) se trouvant sur la zone de plancher de levage (21), d'une position de base à une position de levage et inversement, la zone de plancher de levage (21) présentant dans la position de base le même niveau de hauteur qu'au moins une zone de plancher (25) côté passage, adjacente à la zone de plancher de levage (21), et étant agencée verticalement en dessous d'au moins une zone de plancher haute (17) adjacente à la zone de plancher de levage (21), et la zone de plancher de levage (21) présentant dans la position de levage le même niveau de hauteur que la zone de plancher haute (17) adjacente à la zone de plancher de levage.

2. Bus selon la revendication 1, **caractérisé en ce qu'**au moyen du dispositif de levage (23), la zone de plancher de levage (21) peut être déplacée verticalement, conjointement avec un utilisateur de fauteuil roulant se trouvant sur la zone de plancher de levage (21) en tant que passager, de la position de base à la position de levage et inversement, et **en ce que** la zone de plancher haute (17) forme une surface de positionnement (15) pour l'utilisateur de fauteuil roulant (5).

3. Bus selon la revendication 1 ou 2, **caractérisé en ce que** la zone de plancher haute est formée par une zone de plancher côté passage.

4. Bus selon l'une quelconque des revendications précédentes, **caractérisé en ce que** la transition entre la zone de plancher de levage (21) agencée dans la position de base et la zone de plancher haute (17) est réalisée sous forme échelonnée, notamment sous forme de marches d'escalier.

5. Bus selon l'une quelconque des revendications précédentes, **caractérisé en ce que** le dispositif de levage (23) présente un dispositif d'entraînement (27), notamment pneumatique, au moyen duquel la zone de plancher de levage (21) peut être déplacée verticalement par rapport à la zone de plancher haute (17), conjointement avec l'objet (5) se trouvant sur la zone de plancher de levage.

6. Bus selon la revendication 5, **caractérisé en ce que** le dispositif d'entraînement réalisé sous forme de dispositif d'entraînement pneumatique (27) présente au moins un, notamment plusieurs, coussins d'air (33) pouvant être gonflés au moyen d'un dispositif de gonflage (31), notamment au moyen d'un compresseur, la zone de plancher de levage (21) pouvant être soulevée verticalement par rapport à la zone de plancher haute (17) par gonflage de l'au moins un coussin d'air (33), et la zone de plancher de levage (21) pouvant être abaissée verticalement par rapport à la zone de plancher haute (17) par vidage d'air de l'au moins un coussin d'air (33).

7. Bus selon la revendication 6, **caractérisé en ce que** la zone de plancher de levage (17) est formée par un segment de plancher, notamment en forme de plaque, l'au moins un coussin d'air (33) étant agencé, vu dans la direction verticale, entre le segment de plancher et une zone de paroi de support (39) agencée en dessous du segment de plancher (21) pour soutenir verticalement l'au moins un coussin d'air (33), il étant de préférence prévu que le segment de plancher agencé dans la position de base repose sur au moins un élément de support.

8. Bus selon la revendication 7, **caractérisé en ce que** la zone de paroi de support (39) et/ou un élément de support (37), sur lequel repose le segment de plancher agencé dans la position de base, est formé par un corps de cuve, l'au moins un coussin d'air (33) étant agencé au moins partiellement dans un espace de réception (35) du corps de cuve (37), il étant de préférence prévu que le corps de cuve (37) est relié, notamment au moyen d'une liaison soudée, à un cadre de châssis (20) du bus (1).

9. Bus selon l'une quelconque des revendications précédentes, **caractérisé en ce que** la zone de plancher de levage (21) est formée par un segment de plancher, notamment en forme de plaque, le dispositif de levage (23) présentant un dispositif de guidage (45, 51) au moyen duquel le segment de plancher (21) peut être guidé de manière à pouvoir être déplacé verticalement par rapport à la zone de plancher haute (17).

10. Bus selon la revendication 8 ou 9, **caractérisé en ce que** le segment de plancher (21) est fixé au corps de cuve (37) de manière à pouvoir être déplacé verticalement par rapport au corps de cuve (37), il étant de préférence prévu que le corps de cuve (37) présente plusieurs, notamment deux, barres de guidage (45), au moyen desquelles le segment de plancher (21) est guidé de manière à pouvoir être déplacé verticalement par rapport au corps de cuve (37).

11. Bus selon la revendication 10, **caractérisé en ce qu'**à chaque barre de guidage du corps de cuve (37) est associé un élément de guidage (51) correspondant du segment de plancher (21), chaque élément de guidage (51) présentant au moins une zone annulaire (53) qui entoure de manière annulaire la barre de guidage (45) associée, notamment avec une distance de fente définie.

12. Procédé d'exploitation d'un bus selon l'une quelconque des revendications précédentes, le bus (1) présentant plusieurs places de passagers (9) et au moins un passage (7) praticable et/ou accessible pour atteindre les places de passagers (9), **caractérisé en ce que** le bus (1) présente au moins un dispositif de levage (23) au moyen duquel une zone de plancher de levage (21) du passage (7) est déplacée verticalement, conjointement avec un objet (5) se trouvant sur la zone de plancher de levage (21), d'une position de base à une position de levage et inversement, la zone de plancher de levage (21) présentant dans la position de base le même niveau de hauteur qu'au moins une zone de plancher (25) côté passage, adjacente à la zone de plancher de levage (21), et étant agencée verticalement en dessous d'au moins une zone de plancher haute (17) adjacente à la zone de plancher de levage (21), et la zone de plancher de levage (21) présentant dans la position de levage le même niveau de hauteur que la zone de plancher haute (17) adjacente à la zone de plancher de levage (21).
